# EUROPÄISCHE PATENTSCHRIFT

(11) **EP 2 326 852 B1**
(45) Veröffentlichungstag und Bekanntmachung des Hinweises auf die Patenterteilung: **08.10.2014**
(21) Anmeldenummer: 09776049.0
(22) Anmeldetag: 03.08.2009
(51) Int. Cl.: F16D 21/06, F16D 25/08

(54) **ANTRIEBSTRANG MIT EINER DOPPELKUPPLUNG**
DRIVELINE WITH DUAL CLUTCH
LIGNE D'ENTRAÎNEMENT AVEC DOUBLE EMBRAYAGE

(30) Priorität: 22.08.2008 DE 102008039358; 18.12.2008 DE 102008063749; 18.03.2009 DE 102009013443
(43) Veröffentlichungstag der Anmeldung: 01.06.2011
(73) Patentinhaber: Schaeffler Technologies GmbH & Co. KG, 91074 Herzogenaurach (DE)
(72) Erfinder: ACKER, Christophe, F-67760 Gambsheim (FR); HAHN, Sibylle, 77836 Rheinmünster (DE)
(74) Vertreter: Hoferer, Andreas
(86) Internationale Anmeldenummer: PCT/DE2009/001087
(87) Internationale Veröffentlichungsnummer: WO 2010/020208

(56) Entgegenhaltungen:
- EP-A1- 0 931 951
- EP-A1- 1 830 095
- EP-A2- 1 413 795
- DE-A1- 1 505 577
- DE-A1- 19 941 837
- FR-A1- 2 851 627

## Beschreibung

Die vorliegende Erfindung betrifft einen Antriebsstrang mit einer Doppelkupplung und einem Doppelkupplungsgetriebe mit einer solchen Doppelkupplung.

Doppelkupplungen, wie beispielsweise aus der EP 0 185 176 B1 bekannt, ermöglichen eine zugkraftunterbrechungsfreie Schaltung zwischen unterschiedlichen Übersetzungsstufen (Gängen) eines Getriebes.

Bei dem aus der EP 0 185 176 B1 bekannten Doppelkupplungsaufbau mit einer ersten Teilkupplung K1 und einer zweiten Teilkupplung K2, die jeweils mit einer der beiden Eingangswellen eines Doppelkupplungsgetriebes verbunden sind, sind beide Teilkupplungen K1 und K2 im Grundzustand offen ("normally open") ausgebildet und werden über eine hydraulische Betätigungseinrichtung geschlossen. Dabei wird die motorseitige Teilkupplung K1 von der Betätigungseinrichtung zugezogen und die getriebeseitige Teilkupplung K2 wird durch die Betätigungseinrichtung zugedrückt. Da beide Teilkupplungen K1 und K2 im Grundzustand of-fen sind, muss zur Kraftübertragung von Antrieb auf Getriebe durchgängig eine Betätigungskraft über die Betätigungseinrichtung auf die jeweils geschlossen zu haltende Teilkupplung aufgebracht werden, welche dann über die Lagerung der Doppelkupplung abgestützt werden muss.

Bei LKW-Anwendungen, welche ein Drehmoment im Bereich von 3.300 bis 3.500 Nm aufweisen können, treten Betätigungskräfte im Bereich von 12.400 bis 15.000 N auf, welche dann über eine Kurbelwellenlager oder ein Getriebelager aufgestützt werden müssen.

Ein Antriebstrang mit einer Doppelkupplung und einem Doppelkupplungsgetriebe, wobei sich die Betätigungskräfte in der Doppelkupplung aufheben, ist z.B. aus DE-A-1 505 577 bekannt.

Es ist eine Aufgabe der vorliegenden Erfindung, einen Antriebstrang mit einer Doppelkupplung anzugeben, bei der die Summe der notwendigen Betätigungskräfte der Teilkupplungen minimiert ist und deren Betrieb energiesparend ist.

Diese Aufgabe wird erfindungsgemäß gelöst durch einen Antriebstrang gemäß Anspruch 1, wobei eine Doppelkupplung mit einer ersten Teilkupplung K1, über die eine Antriebswelle eines Antriebes mit einer ersten Getriebeeingangwelle eines Getriebes verbindbar ist und mit einer zweiten, Teilkupplung K2, über die die Antriebswelle des Antriebes mit einer zweiten Getriebeeingangswelle des Getriebes verbindbar ist, und mit einer Betätigungseinrichtung, wobei die erste Teilkupplung K1 in deren unbetätigtem Zustand offen ist und zum Schließen dieser ersten Teilkupplung K1 eine Zugkraft durch die Betätigungseinrichtung aufgebracht wird und wobei die zweite Teilkupplung K2 in deren unbetätigtem Zustand geschlossen ist und zum Öffnen dieser zweiten Teilkupplung K2 eine Druckkraft durch die Betätigungseinrichtung aufgebracht wird, so dass die Betätigungskraft der ersten Teilkupplung K1 entgegen der Betätigungskraft der zweiten Teilkupplung K2 wirkt.

Entsprechend ist bei der erfindungsgemäßen Doppelkupplung die Summe der notwendigen Betätigungskräfte der Teilkupplungen in Betrieb minimiert, so dass auf eine verstärkte Auslegung der Lagerung sowie aller entsprechend notwendiger Änderungen im Gehäuse verzichtet werden kann. Gerade bei einer Überschneidungsschaltung der Teilkupplungen K1 und K2 bei einem Gangwechsel ergibt sich eine quasi Aufhebung der Betätigungskraftwirkung auf die Lagerung der Doppelkupplung.

Gemäß der Erfindung umfasst die Betätigungseinrichtung eine erste pneumatisch oder hydraulisch betätigbare Zylindereinheit mit Zylindergehäuse und Kolben zum Ziehen eines Betätigungslagers der einen Teilkupplung K1 und eine zweite pneumatisch oder hydraulisch betätigbare Zylindereinheit mit Zylindergehäuse und Kolben zum Drücken eines Betätigungslagers der anderen Teilkupplung K2. Gerade bei LKW-Anwendungen ist eine Pneumatikanlage beim Fahrzeug bereits vorhanden, so dass gerade die Ausbildung mit einer pneumatischen Betätigungskraft vorteilhaft ist, da die Betätigungseinrichtung unmittelbar an das vorhandene Borddruckluftnetz anschließbar ist.

Gemäß einem bevorzugten Ausführungsbeispiel ist eine Schwungscheibe mit oder ohne Schwingungsdämpfung vorgesehen, die mit einer Antriebswelle eines Antriebes fest verbunden ist, wobei die Doppelkupplung eine Zentralplatte als Gegendruckplatte für die Druckplatten der Teilkupplungen K1 und K2 aufweist, wobei die Zentralplatte an der Schwungscheibe fixiert ist und wobei die Doppelkupplung ausschließlich über die Befestigung der Schwungscheibe an der Antriebswelle gelagert ist. Dabei wird vorliegend unter Schwungscheibe mit oder ohne Schwingungsdämpfung insbesondere auch eine sogenannte Flexplate (als ein Beispiel ohne Schwingungsdämpfung) oder ein Zweimassenschwungrad (als ein Beispiel mit Schwingungsdämpfung) verstanden.

Bevorzugterweise sind die Druckplatten beider Teilkupplungen K1 und K2 über Blattfedern, insbesondere in Verbindung mit Nietverbindungen, direkt an der Zentralplatte oder am Gehäuse der Doppelkupplung fixiert.

Weiterhin kann der Kupplungsdeckel der Teilkupplung K2 an der Zentralplatte fixiert sein.

Gemäß der Erfindung wirken die eine Zugkraft erzeugende erste Zylindereinheit über ein erstes Betätigungslager mit der zugezogenen und im Normalzustand offenen Teilkupplung K1 und die eine Druckkraft erzeugende zweite Zylindereinheit über das andere Betätigungslager mit der aufgedrückten und im Normalzustand geschlossenen Teilkupplung K2 zusammen.

Gemäß der Erfindung sind die beiden Zylindereinheiten dabei ineinander geschachtelt und insbesondere auch symmetrisch zu einer Achse der Getriebeeingangswellen bzw. der Kupplung angeordnet, so dass diese bezogen auf die Achse eine innere Zylindereinheit und eine äußere Zylindereinheit bilden, wobei die äußere Zylindereinheit als die eine Zugkraft erzeugende erste Zylindereinheit und die innere Zylindereinheit als die eine druckkrafterzeugende zweite Zylindereinheit ausgebildet sind.

Die Doppelkupplung kann weiterhin ein zentrales und getriebeseitig abgestütztes Führungsrohr aufweisen, wobei der Kolben der inneren Zylindereinheit auf dem zentralen Führungsrohr bewegbar abgestützt ist und wobei ein Kolben der äußeren Zylindereinheit auf dem Zylindergehäuse der inneren Zylindereinheit bewegbar abgestützt ist.

Desweiteren können das Zylindergehäuse der inneren Zylindereinheit und/oder das Zylindergehäuse der äußeren Zylindereinheit an einer Rückwand der Betätigungseinrichtung befestigt sein, welche am zentralen Führungsrohr abgestützt ist.

Zwischen Rückwand und Kolben der inneren Zylindereinheit kann eine Vorlastfeder für die innere Zylindereinheit angeordnet sein, mit der ein Kolben in Richtung auf das zugehörige Betätigungslagers der Teilkupplung K2 gedrückt wird, wobei eine Druckkammer der inneren Zylindereinheit durch Kolben und Zylindergehäuse der inneren Zylindereinheit und Rückwand gebildet ist.

Weiterhin kann zwischen Zylindergehäuse und Kolben der äußeren Zylindereinheit eine Vorlastfeder für die äußere Zylindereinheit angeordnet sein, wobei eine Druckkammer der äuβeren Zylindereinheit ausschließlich durch Zylindergehäuse und Kolben der äußeren Zylindereinheit gebildet sind.

Die vorliegende Erfindung lehrt insbesondere auch einen Antriebstrang mit einem Doppelkupplungsgetriebe mit einer ersten und einer zweiten Getriebeeingangswelle, wobei eine erste Gruppe von Übersetzungsstufen der ersten Getriebeeingangswelle und eine zweite Gruppe von Übersetzungsstufen der zweiten Getriebeeingangswelle zugeordnet sind, und wobei die Getriebeeingangswellen über eine Doppelkupplung entsprechend der vorstehenden Lehre mit einer Antriebswelle eines Antriebes verbindbar sind, indem die erste Getriebeeingangswelle über die erste Teilkupplung K1 und die zweite Getriebeeingangswelle über die zweite Teilkupplung K2 mit der Antriebswelle verbindbar sind und wobei diejenige Übersetzungsstufe, die im Betrieb des Doppelkupplungsgetriebe am meisten genutzt wird, der zweiten Getriebeeingangswelle und der zweiten Teilkupptung K2 zugeordnet ist. Gemäß der Erfindung ist die größte Übersetzungsstufe (bei einem LKW - Getriebe beispielsweise der 12. Gang) der zweiten Getriebeeingangswelle und der zweiten Teilkupplung zugeordnet, wobei die größte Übersetzungsstufe die in Betrieb des Doppelkupplungsgetriebes am meisten genutzte Getriebestufe sein kann.

Die vorliegende Erfindung wird nachfolgend anhand bevorzugter Ausführungsbeispiele in Verbindung mit den zugehörigen Figuren näher erläutert. In diesen zeigen:
Fig. 1 eine Darstellung eines ersten nicht erfindungsgemäßen Ausführungsbeispieles einer Doppelkupplung als Halbschnitt mit im Normalzustand geschlossener und aufgezogener Teilkupplung K1 und im Normalzustand offener und zugedrückter Teilkupplung K2, mit schematisch dargestellter pneumatischer Betätigungseinrichtung,
Fig. 2 eine weitere Darstellung des ersten Ausführungsbeispieles mit Bewegungspfeilen zur Verdeutlichung der Bewegung der Bauteile bei Betätigung der Teilkupplung K1,
Fig. 3 eine weitere Darstellung des ersten Ausführungsbeispieles mit Bewegungspfeilen zur Verdeutlichung der Bewegung der Bauteile bei Betätigung der Teilkupplung K2,
Fig. 4 ein Diagramm zur Verdeutlichung des Verlaufs der Betätigungskräfte der Teilkupplungen K1 und K2 beim ersten Ausführungsbeispiel der vorliegenden Doppelkupplung bei einer Überschneidungsschaltung,
Fig. 5 eine Darstellung des Aufbaues eines zweiten Ausführungsbeispieles der Doppelkupplung mit im Grundzustand offener und zugezogener Teilkupplung K1 und im Grundzustand geschlossener und aufgedrückter Teilkupplung K2 im Neuzustand (d. h. ohne Verschleiß),
Fig. 6 eine weitere Darstellung des zweiten Ausführungsbeispieles mit geschlossener (d.h. betätigter) Teilkupplung K1 und offener (d.h. betätigter) Teilkupplung K2 im Neuzustand, mit Bewegungspfeilen zur Verdeutlichung der Bewegung der Bauteile bei Betätigung der Teilkupplungen K1 und K2,
Fig. 7 eine weitere Darstellung des zweiten Ausführungsbeispieles im Verschleißzustand mit offener Teilkupplung K1 und geschlossener Teilkupplung K2 (d.h. beide Teilkupplungen im Grundzustand) und
Fig. 8 eine weitere Darstellung des zweiten Ausführungsbeispieles im Verschleißzustand mit geschlossener Teilkupplung K1 und offener Teilkupplung K2 (d.h. beide Teilkupplungen sind betätigt).

Die vorliegenden Ausführungsbeispiele der Betätigungseinrichtung sind insbesondere für Fahrzeuge mit einer Druckluftanlage verwendbar, also beispielsweise bei Lastkraftwagen.

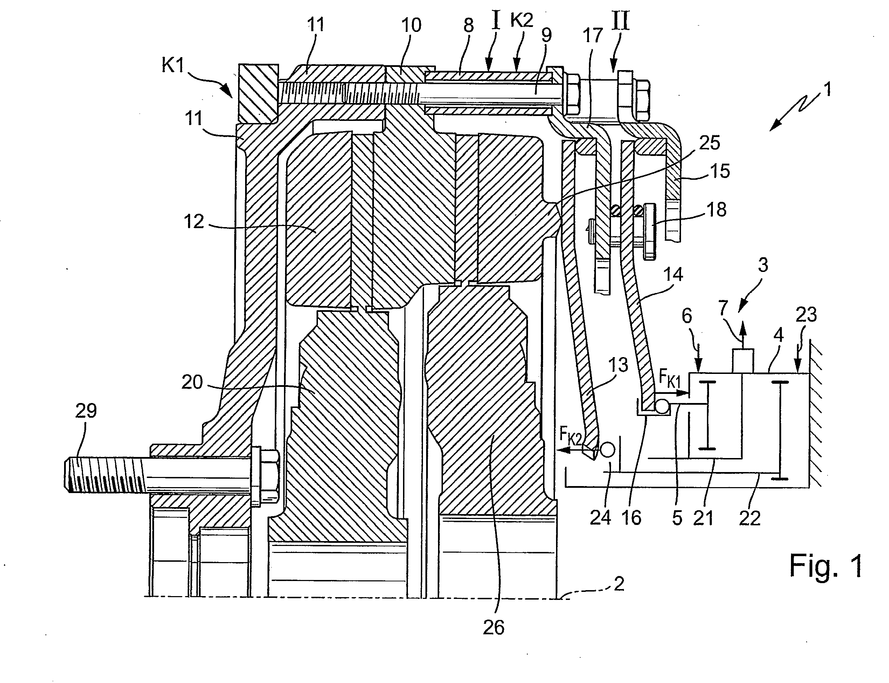

Fig. 1 zeigt den Aufbau eines ersten, nicht erfindungsgemäßen Ausführungsbeispieles einer Doppelkupplung mit pneumatisch betätigter Zentralausrückereinheit für beide Teilkupplungen (nachfolgend auch als "Doppel-CPCA" bezeichnet), welche bei Fahrzeugen mit Druckluftanlagen einsetzbar ist. Die vorliegende Lehre ist jedoch nicht auf die Verwendung einer pneumatisch betätigten Zentralausrückereinheit beschränkt. Auch hydraulische, hydraulischmechanisch betätigte, elektrische, elektro-mechanisch betätigte oder mechanische Betätigungseinrichtungen sind mit den offenbarten Doppelkupplungskonzepten bzw. Doppelkupplungsgetriebekonzepten kombinierbar.

Die vorliegende Doppelkupplung ist im Antriebstrang eines Fahrzeuges zwischen einem Antrieb und einem Doppelkupplungsgetriebe angeordnet, wobei zwischen Antrieb und Doppelkupplung ein Torsionsschwingungsdämpfungselement, wie ein Zweimassenschwungrad, oder eine nicht geteilte Schwungmasse (Schwungrad) angeordnet sein kann.

Der Doppelkupplungsaufbau 1 gemäß dem ersten Ausführungsbeispiel umfasst eine erste Teilkupplung K1, welche im Grundzustand geschlossen ist ("normally closed"), wobei der Betätigungsmechanismus dieser Teilkupplung K1 derart ausgebildet ist, dass diese erste Teilkupplung K1 mit einer Zugkraft F_{K1} beaufschlagt wird, um diese zu Öffnen, sowie eine zweite Teilkupplung K2, welche im Grundzustand offen ist ("normally open"), wobei der Betätigungsmechanismus dieser Teilkupplung K2 derart ausgebildet ist, dass diese zum Schließen mit einer Druckkraft F_{K2} beaufschlagt wird. Eine der Teilkupplungen K1 und K2 kann eine Verschleißnachstelleinrichtung aufweisen. Ebenso können beide Teilkupplungen K1 und K2 jeweils Verschleißnachstelleinrichtungen aufweisen. Alternativ kann (wie nachfolgend noch im Zusammenhang mit dem zweiten Ausführungsbeispiel ausgeführt eine Verschleißreserve für den Betätigungsweg in die pneumatische (oder hydraulische) Betätigungseinrichtung integriert werden.

Die Betätigungskräfte (Zugkraft F_{K1} der Teilkupplung K1 und Druckkraft F_{K2} der Teilkupplung K2) werden von einer bezüglich einer Rotationsachse 2 der Doppelkupplung 1 zentral angeordneten Betätigungseinrichtung 3 erzeugt, welche vorliegend pneumatisch beaufschlagt wird. Alternativ ist auch eine hydraulische Betätigung möglich. Eine pneumatische Betätigung hat jedoch den Vorteil der sehr viel niedrigeren Dichte von Luft, so dass auf einen bei hydraulischen Medien ggf. notwendigen Fliehkraftausgleich aufgrund der sich verändernden Masseverhältnissen bei Betätigung der Kupplung verzichtet werden kann.

Die Betätigungseinrichtung 3 umfasst eine erste Zylindereinheit ("äußere Zylindereinheit") mit einem Zylindergehäuse 4 und einem Betätigungskolben 5 und zumindest einer Druckkammer, die an ein Druckmedium 6 anschließbar ist.

Der Aufbau der ersten Zylindereinheit 4 der Betätigungseinrichtung 3 ist derart, dass durch die Tellerfeder die Druckplatte 12 an die Zentralplatte 10 angepresst wird. Die aus dieser Pressung resultierende Kraft definiert das maximal übertragbare Antriebsmoment über die Teilkupplung K1. Dabei sind die Hebelfederzungen der Hebelfeder 14 in Wirkverbindung mit dem Betätigungslager 16. Ein äußeres Ende der Hebelfeder 14 ist am Deckel der Teilkupplung K1 (nachfolgend auch als 'Zuganker' bezeichnet) gelagert. Ein mittlerer Bereich der Hebelfeder 14 ist am Deckel 17 der Teilkupplung K2 abgestützt.

Bei Erzeugung der Zugkraft F_{K1} in der äußeren Zylindereinheit 4, 5 (ausgehend vom geschossenen Grundzustand der Teifkupplung K1) werden das innere Ende der Hebelfeder 14 (d.h. die Hebelfederzungen) und das Ausrücklager 16 in Fig. 1 nach rechts verschoben, die Hebelfeder 14 (welche beispielsweise als Tellerfeder ausgelegt sein kann) wird um die Auflagerung 18 verschwenkt, der Deckel 15 wird in Fig. 1 nach links verschoben und die Druckplatte 12 der Teilkupplung K1 wird aufgrund der Wirkung der Blattfederelemente ebenfalls nach links in Fig. 1 verschoben wird, wodurch eine Klemmung der Kupplungsscheibe 20 aufgehoben wird. Die im Grundzustand geschlossene Kupplung K1 ist dann aufgrund der Zugkraft F_{K1} geöffnet.

Die Betätigungseinrichtung 3 umfasst zudem eine zweite Zylindereinheit ("innere Zylindereinheit"), welche ein Zylindergehäuse 21 und einen Kolben 22 sowie zumindest eine Druckkammer aufweist, die an ein Druckmedium anschließbar ist.

Die zweite Zylindereinheit 21 ist derart aufgebaut, dass eine Druckkraft F_{K2} erzeugt wird, welche über das Betätigungslager 24 (Einrücklager) an die Hebelfeder 13 vermittelt wird. Der äußere Bereich der Hebelfeder 13 ist am Deckel 17 der Teilkupplung K2 abgestützt, welcher über die Distanzstücke 8 der Schraubenverbindungen I an der Zentralplatte 10 abgestützt und über die Schrauben 9 der Schraubenverbindung I an der Schwungscheibe 11 befestigt ist.

Wie dargelegt ist die Betätigungseinrichtung 3 der Doppelkupplung 1 als Doppelzentraleinrücker/-ausrücker mit pneumatischer oder hydraulischer Betätigung ausgebildet. Aufgrund der gewählten Kraftrichtungen sind die Betätigungskräfte der Kupplung K1 und die Betätigungskräfte der Kupplung K2 einander entgegengesetzt, so dass keine axiale Kraft auf die Kurbelwelle übertragen wird.

Wie weiterhin dargelegt ist die Teilkupplung K1 im Grundzustand geschlossen und muss gezogen werden, um diese zu öffnen und die Teilkupplung K2 ist im Grundzustand offen und muss gedrückt werden, um sie zu schließen, wiederum so dass die Betätigungskräfte K1 und K2 einander entgegenwirken und eine axiale Kraft auf die Kurbelwelle vermieden werden kann.

Die vorstehende Beschreibung offenbart unter anderem, dass die beiden Betätigungskräfte einer Doppelkupplung, einmal die Betätigungskraft der zugedrückten "normally open" Kupplung K2 und einmal die Betätigungskraft der gezogenen "normally closed" Kupplung K1, sich ausgleichen, so dass die Summe den beiden Betätigungskräfte nahezu Null ist, und eine Überdimensionierung des Kurbelwellelagers oder des Getriebelagers nicht erforderlich ist.

Wie dargelegt umfasst der Doppelkupplungsaufbau nach Fig. 1 eine "normally closed" und aufgezogene Teilkupplung K1 und eine "normally open" und zugedrückte Teilkupplung K2. Bei einem Gangwechsel (Übersetzungsstufenwechsel) sei angenommen, dass die Teilkupplung K1 geschlossen und die Teilkupplung K2 geöffnet ist. Dann muss die Betätigungseinrichtung zu diesem Moment keine Betätigungskraft aufbringen. Ist ein Gangwechsel beabsichtigt, so muss die Teilkupplung K1 geöffnet werden. Dies wird ausgeführt, indem an der Tellerfeder 14 mit der Kraft F_{K1} gezogen wird. Um zugleich die Teilkupplung K2 zu schließen, wird die Hebelfeder 13 gedrückt. Die Betätigungskräfte sind dementsprechend gegenläufig und die Summe beider Betätigungskräfte ist nahezu Null. Werden die Betätigungskräfte nicht mehr ausgeübt, so schließt sich die Teilkupplung K1 durch ihre eigene Tellerfederkraft und die Teilkupplung K2 öffnet sich wieder durch seine eigene Blattfederkraft.

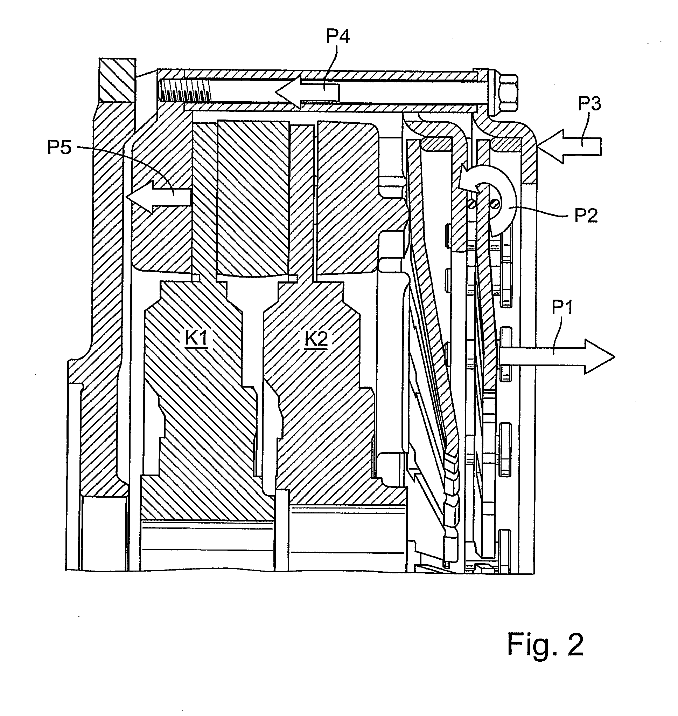

Diese zur Betätigung der Teilkupplung K1 notwendigen Verlagerungen der Bauteile sind in Fig. 2 über die Pfeile 1 bis 5 verdeutlicht. Dabei zeigt Figur 1 den Bewegungspfeil P1 für die Tellerfederzungen. Die durch die Betätigungseinrichtung 3 ausgeübte Zugkraft weist in die gleiche Richtung wie Pfeil P1. Der Pfeil 2 zeigt die Verdrehung der Tellerfeder 14 um deren Aufiagepunkt. Das durch die Betätigungseinrichtung aufgebrachte Moment weist in die gleiche Richtung wie Pfeil P2. Pfeil 3 zeigt die Bewegung des Zugankers 15 der Teilkupplung K1. Pfeil 4 zeigt die Bewegung der Schraubverbindungen mit Schrauben und Distanzhülsen zwischen Zuganker 15 und Druckplatte 12 der Teilkupplung K1. Pfeil 5 zeigt die Bewegung der Druckplatte 12, wodurch letztlich die "normally closed" Teilkupplung K1 aufgezogen wird durch die Kraft F_{K1}.

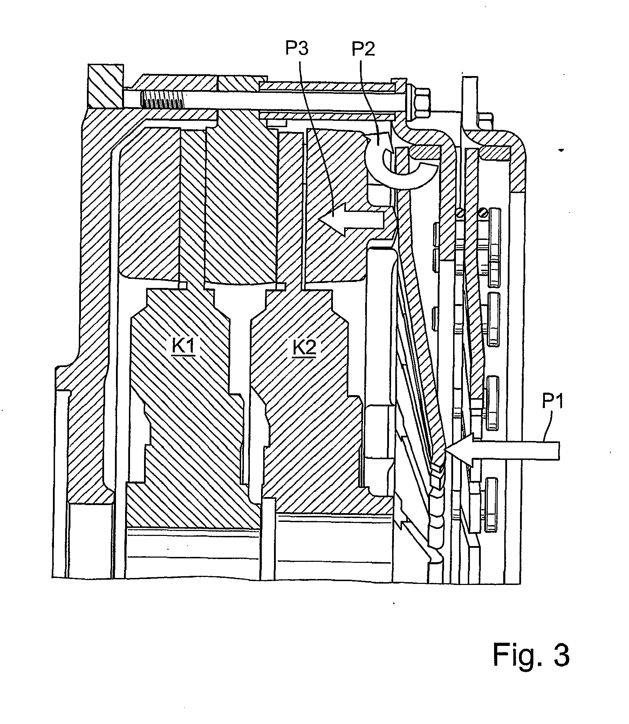

Fig. 3 zeigt die Verhältnisse bei der Doppelkupplungsanordnung gemäß Fig. 1 bei Betätigung der Teilkupplung K2. Die zur Betätigung der Teilkupplung K2 notwendigen Verlagerungen der Bauteile sind in Fig. 2 über die Pfeile 1 bis 3 verdeutlicht. Dabei zeigt Pfeil P1 die Bewegung der Hebelfederzungen. Die auf die Hebelfeder 13 ausgeübte Druckkraft F_{K2} weist in die gleiche Richtung wie Pfeil 1. Pfeil 2 zeigt die Rotation der Hebelfeder 13 um deren Auflagerungspunkt. Das durch die Betätigungseinrichtung aufgebrachte Moment weist in die gleiche Richtung wie Pfeil 2. Pfeil 3 zeigt die Verlagerung der Druckplatte 25 der Teilkupplung K2 zum Schließen der "normally open" Teilkupplung K2.

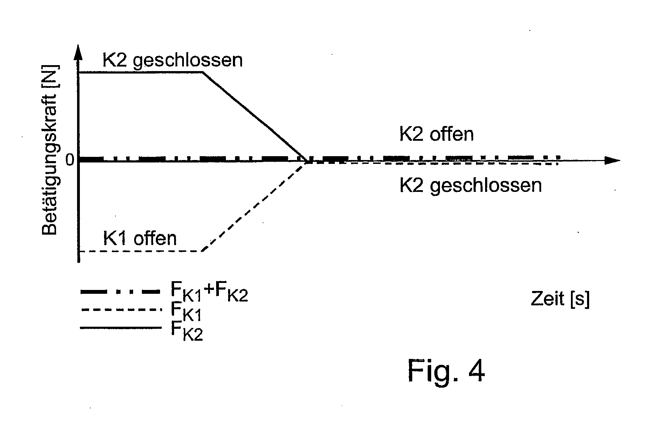

In Fig. 4 sind die Betätigungskraftverhältnisse und die hieraus resultierende Auswirkung auf die Kurbelwellenaxialkraft gezeigt, wobei die Betätigungskräfte F_{K1}, F_{K2} sowie die resultierende Betätigungskraft F_{K1} + F_{K2} dargestellt sind.

Bei dem In Fig. 4 gezeigten Verlauf der Betätigungskräfte bei der Überschneidungsschaltung sind Teilkupplung K1 zunächst offen und Teilkupplung K2 zunächst geschlossen, wobei die Betätigungskräfte der Teilkupplungen K1 und K2 einander entgegen gerichtet sind. Die Gesamtbetätigungskraft ist daher nahezu Null. Anschließend wird eine Überschneidungsschaltung durchgeführt, um die Teilkupplung K1 zu schließen und die Teilkupplung K2 zu öffnen. Entsprechend nimmt die Betätigungskraft der Teilkupplung K1 zu und die Betätigungskraft der Teilkupplung K2 ab. Die Gesamtbetätigungskraft bleibt daher im Wesentlichen gleich Null. Im Endzustand ist die Teilkupplung K1 geschlossen und die Teilkupplung K2 offen.

Um die Teilkupplung K1 zu öffnen, muss bei dieser Anordnung an der Tellerfeder gezogen werden. Um die Teilkupplung K2 gleichzeitig zu schließen, muss die Hebelfeder gedrückt werden. Die Betätigungskräfte sind also gegensinnig und die Summe den beiden ist nahe zu null. Damit ergibt sich auch keine axiale Kraftwirkung auf die Kurbelwelle.

Entsprechend kann das in Fig. 1 gezeigte erste Ausführungsbeispiel der Doppelkupplungsanordnung die Aufgabe der vorliegenden Erfindung lösen, die Axialkraft, z. B. auf die Kurbelwelle gering zu halten, da die Summe beider Betätigungskräfte einmal gedrückt und gleichzeitig einmal gezogen nahezu Null ist.

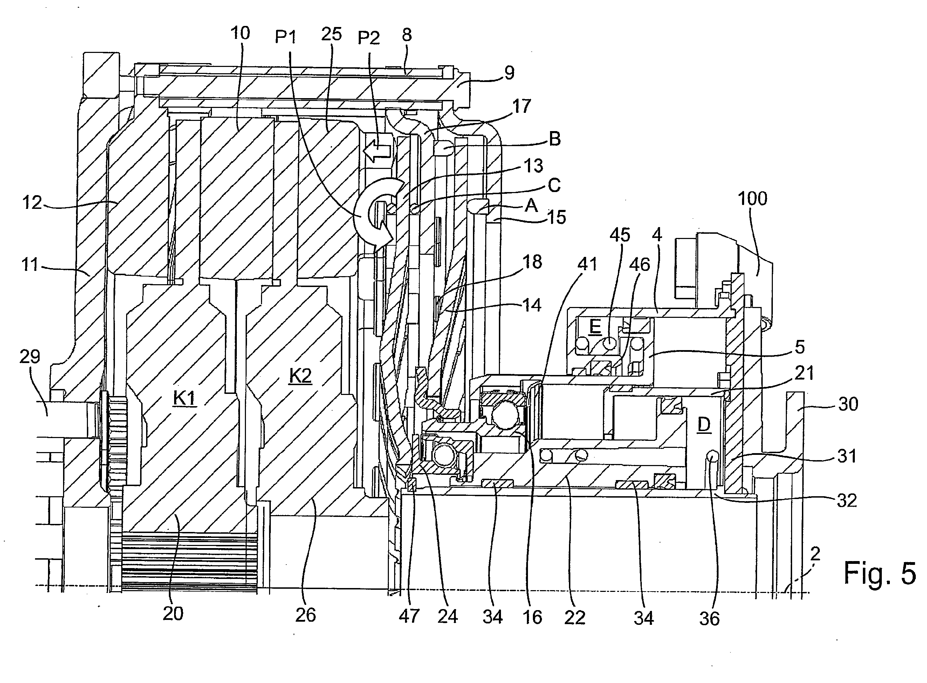

Fig. 5 zeigt ein zweites Ausführungsbeispiel einer Doppelkupplungsanordnung mit einem Ausgleich der Betätigungskräfte (vergleichbar dem Ausführungsbeispiel nach Fig. 1), wobei gleiche Teil der Doppelkupplungsanordnung mit gleichen Bezugszeichen versehen sind, und wobei dieses Ausführungsbeispiel im Hinblick auf eine bestimmte Ausbildung eines Doppelkupplungsgetriebes optimiert ist. In Fig. 5 ist zudem der der in Fig. 1 gezeigte schematisch skizzierte Aufbau der Betätigungseinrichtung 3 präzisiert.

So zeigt Fig. 5 ein zentrales Führungsrohr 32, welches über einen Flansch 30 an einem Getriebegehäuse mittelbar oder unmittelbar befestigt ist. Über Führungsrohr 32 und Flansch 30 ist die vorliegende Betätigungseinrichtung 3 also getriebeseitig abgestützt. Flansch und Führungsrohr sind vorliegend ineinander gesteckt. Zur Verbindung kann abhängig vom jeweiligen Anwendungsfall eine (Press-)Passung, oder eine formschlüssige Verbindung oder eine stoffschlüssige Verbindung vorgesehen sein. Alternativ zu einem zentralen Führungsrohr kann auch ein radial außenliegendes Rohr oder ein zwischen den Zylindereinheiten liegendes Rohr verwendet werden. Der Begriff "Rohr" ist so zu verstehen, dass sowohl kreis(ring)förmige als auch andere rotationssymmetrische oder nicht-rotationssymmetrische Querschnitte umfasst sind. Gerade nicht-rotationssymmetrische Querschnitte bieten die Möglichkeit einer Verdrehsicherung der Kolben innerhalb der Zylinder.

Flansch 30 und zentrales Führungsrohr 32 weisen radial innen eine Öffnung auf, durch welche die koaxial und ineinander geschachtelt angeordneten Getriebeeingangswellen hindurchgeführt sind. In Fig. 5 sind die Getriebeeingangswellen nicht im Einzelnen gezeigt.

Am zentralen Führungsrohr 32 ist eine Rückwand 31 der Betätigungseinrichtung 3 abgestützt. Dabei weist das zentrale Führungsrohr einen Schulterbereich auf, auf dem die Rückwand aufliegt. Zur Verbindung kann abhängig vom jeweiligen Anwendungsfall eine (Press-)Passung, oder eine formschlüssige Verbindung oder eine stoffschlüssige Verbindung vorgesehen sein. Insbesondere wenn Flansch und Führungsrohr bereits miteinander fest verbunden sind, so könnte auf eine feste Verbindung zwischen Rückwand und Führungsrohr auch verzichtet werden.

Die Rückwand 31 ist gemäß dem vorliegenden Ausführungsbeispiel nach Fig. 5 fest mit dem Führungsrohr 32 verbunden und über Schraubenverbindungen am Flansch 30 angeschraubt, d.h. die Rückwand verbindet Führungsrohr und Flansch. Führungsrohr und Rückwand könnten auch zu einem Bauteil integriert werden, welches beispielsweise in einem Tiefziehvorgang hergestellt werden könnte. Zwischen Führungsrohr/Rückwand (unabhängig ob als separate Bauteile oder als integrales Bauteil) einerseits und Flansch 30 können auch andere Verbindungsmöglichkeiten als Verschraubungen, beispielsweise vernieten, verwendet werden.

An der Rückwand 31 sind das Zylindergehäuse 4 der äußeren Zylindereinheit und das Zylindergehäuse 21 der inneren Zylindereinheit befestigt, wobei die Zylindergehäuse 4, 21 ineinander geschachtelt und koaxial zur Achse 2 angeordnet sind, so dass sich eine innere Zylindereinheit mit dem Zylindergehäuse 21 und eine äußere Zylindereinheit mit dem Zylindergehäuse 4 ergibt.

Vorliegend sind wiederum Schraubverbindungen zwischen Rückwand und Zylindergehäusen vorgesehen, wobei wie oben dargelegt, auch andere Arten der Verbindung möglich sind, beispielsweise Verkleben oder Vernieten oder Verschweißen oder Verlöten.

Auf dem zentralen Führungsrohr 32 ist der Kolben 22 der inneren Zylindereinheit über vorzugsweise zwei Abstützstellen 34 längs bewegbar abgestützt. Auch eine andere Anzahl an Abstützstellen ist möglich.

Der Kolben 22 in dessen zentraler Öffnung 22A weist eine radiale Nut auf, in der ein Dichtring 35 aufgenommen ist. Dieser Dichtring 35 ist zur Abdichtung des Spaltes zwischen dem Kolben 22 der inneren Zylindereinheit und dem Führungsrohr 32 gedacht. Der Kolben umfasst weiterhin eine in Axialrichtung verlaufende Ausnehmung 22B, in der eine Vorlastfeder 36 aufgenommen ist. Diese Vorlastfeder 36 stützt sich in der Ausnehmung 22B und an der Rückwand 31 ab, so dass der Kolben 22 in Richtung auf das Betätigungslager 24 vorbelastet wird. Über diese Vorbelastung wird das Betätigungslager 24 gegen die Tellerfeder der Kupplung K2 gedrückt. Außerdem sind die Enden der Vorlastfeder derart angeordnet, dass auf einfache Weise eine Verdrehsicherung gebildet ist. Die Druckkammer D der inneren Zylindereinheit ist zwischen dem Betätigungskolben 22, dem Zylindergehäuse 21, der Rückwand 31 und dem Führungsrohr 32 gebildet. Eine Druckmediumzufuhr erfolgt bevorzugt über die Rückwand 31.

Das Zylindergehäuse der inneren Zylindereinheit umfasst einen in Axialrichtung ausgerichteten zylindrischen Bereich. Auf der äußeren Mantelfläche dieses zylindrischen Bereiches ist eine Führung 40 angeordnet. An dieser, vorliegend ballig ausgeführten, Führung 40 ist der Bewegungskolben 5 der äußeren Zylindereinheit abgestützt. Damit ergibt sich eine gewisse Verkippbarkeit des Kolbens der äußeren Zylindereinheit. Auch eine andere Anzahl an Abstützstellen ist möglich.

Der Betätigungskolben 5 der äußeren Zylindereinheit ist dabei mit dem Betätigungslager 16 verbunden, indem das Betätigungslager 16 über das Federelement 45 mit dessen äußerem Laufring gegen den Betätigungskolben 5 vorbelastet ist.

Der Betätigungskolben 5 der äußeren Zylindereinheit bildet mit dem Zylindergehäuse 4 der äußeren Zylindereinheit (d.h. ohne die Rückwand 31) eine Druckkammer E für die äußere Zylindereinheit. Diese Druckkammer E ist über die Dichtringe 41 und 43 abgedichtet. Der Druckmediumzufluss erfolgt über die Verbindungsstelle 44, welche unmittelbar am Zylindergehäuse 4 ansetzt.

In der Druckkammer E der äußeren Zylindereinheit ist eine Vorlastfeder 45 aufgenommen. Über diese zwischen Zylindergehäuse 4 und Bewegungskolben 5 der äußeren Zylindereinheit angeordnete Vorlastfeder 45 wird das Betätigungslager 16 in axialer Richtung auf das Getriebe hin vorbelastet, so dass das Betätigungslager 16 in Anlage mit der Tellerfeder der Teilkupplung K1 gedrückt wird.

Im motorseitigen Stirnbereich des Zylindergehäuses 4 der äußeren Zylindereinheit ist eine weitere Abstützstelle angeordnet, an der der Betätigungskolben 5 der äußeren Zylindereinheit zusätzlich zur ersten balligen Abstützstelle abgestützt ist.

Wie dargelegt, sind die Kolben 5 und 22 axial verlagerbar angeordnet. Ein maximaler Bewegungsweg des Bewegungskolbens 22 der inneren Zylindereinheit ist über den Anschlag 47 begrenzt. Ein maximaler Bewegungsweg des Bewegungskolbens 5 der äußeren Zylindereinheit ist über den Anschlag 46 begrenzt.

Bei der Doppelkupplungsanordnung nach Fig. 5 ist die antriebsseitige Teilkupplung K1 im Grundzustand offen ("normally open") und wird bei Betätigung zugezogen. Die getriebeseitige Teilkupplung K2 ist im Grundzustand geschlossen und wird durch die Betätigungseinrichtung aufgedrückt. Das Tellerfedermoment ist in Fig. 5 mit dem Pfeil P1 um den Auflagerungspunkt C der Tellerfeder herum dargestellt. Die aufgrund dieses Momentes erzeugte Kraft ist durch den Pfeil 2 dargestellt. Die durch die Tellerfeder erzeugte Kraft entspricht der Anpresskraft der im Grundzustand geschlossenen getriebeseitigen Teilkupplung K2 (abzüglich der durch die zwischen Zentralplatte 10 und Druckplatte 25 angeordneten Blattfederpakete erzeugten Kraft).

Dabei zeigt Fig. 5 den Neuzustand der Kupplung. Dies ergibt sich aus der Stellung der Betätigungskolben 22 der inneren Zylindereinheit und des Betätigungskolbens 5 der äußeren Zylindereinheit. Dabei ist der Betätigungskolben 22 der inneren Zylindereinheit ungefähr in der Mitte des maximalen axialen Verlagerungsweges dieses Kolbens gezeigt. Durch Aufbringen einer Druckkraft über die Druckkammer D kann der Kolben in Fig. 5 weiter nach links verschoben werden. Hierdurch wird die Druckkraft auf die Tellerfeder 13 ausgeübt mittels deren die getriebeseitige Teilkupplung K2 aufgedrückt wird entgegen dem in Fig. 5 gezeigten Tellerfedermoment P1. Entsprechend wird die Anpresskraft P2 der Teilkupplung K2 verringert. Ist die Anpresskraft P2 der Teilkupplung K2 geringer als die Kraft der Blattfederpakte zwischen Zentralplatte und Druckplatte 25 sowie die elastischen Kräfte im Kupplungsscheibenbelag, so ist das über die Teilkupplung K2 übertragbare Moment auf Null reduziert.

Wie ausgeführt, ist der Betätigungskolben 22 in einer Mittelstellung gezeigt, so dass auch ein Betätigungsweg nach rechts in Fig. 5 vorgesehen ist, der als Verschleißnachstellungsreserve vorgehalten wird, wie nachfolgend noch ausgeführt.

Der Betätigungskolben 5 ist in seiner vorderen Endlage dargestellt, die sich aus dem Kräftegleichgewicht zwischen Vorlastfeder 45 und Blattfederpakte zwischen Zwischenplatte 10 und Druckplatte 12 oder über den Anschlag 46 ergibt.

Bei Betätigung der äußeren Zylindereinheit wird der Druck in der Betätigungskammer E erhöht, wodurch der Betätigungskolben 5 nach rechts in Fig. 5 verlagert, eine Zugkraft auf die Hebelfeder 14 ausgeübt und aufgrund der Auflagerpunkte A und B der Zuganker 15 nach rechts und damit auch die Druckplatte 12 nach rechts in Fig. 5 verlagert wird, die Teilkupplung K1 also zugezogen wird. Auch bei der äußeren Zylindereinheit ist eine Verschleißreserve vorgesehen, welche allerdings wie auch der Betätigungsweg, rechts vom Betätigungskolben 5 in Fig. 5 vorgesehen ist.

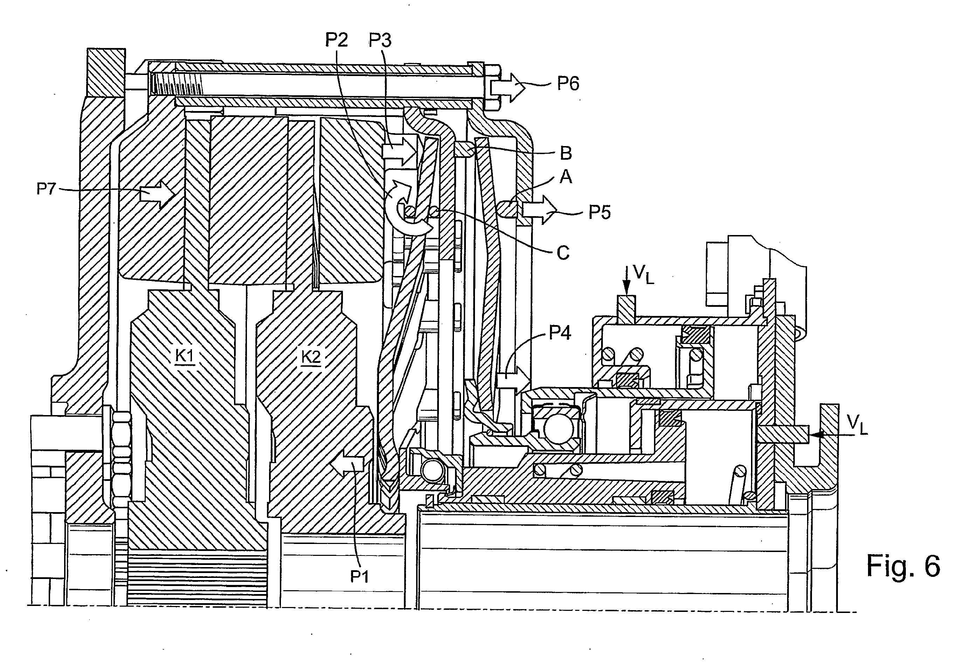

Die Verhältnisse bei Betätigung der Doppelkupplungsanordnung nach Fig. 5 sind in Fig. 6 gezeigt. Dabei zeigt der Pfeil P1 die von der Betätigungseinrichtung erzeugte Druckkraft, Pfeil P2 das um den Auflagerungspunkt C gezeugte Moment, Pfeil P3 die am äußeren Ende der Tellerfeder erzeugte Verlagerung aufgrund deren die Druckplatte der Teilkupplung K2 abhebt und die entsprechende Kupplungsscheibe der Teilkupplung K2 freigibt. Pfeil P4 zeigt die an der Hebelfeder erzeugte Zugkraft, Pfeil P5 zeigt die am Auflagerpunkt A des Zugankers in Verbindung mit dem Auflagerungspunkt B am Kupplungsdeckel der Teilkupplung K2 erzeugte Verlagerung des Zugankers, Pfeil P6 die aus der Verlagerung des Zugankers resultierende Verlagerung der Schraubenverbindung zwischen Zuganker und Druckplatte der Teilkupplung K2 und Pfeil P7 die hieraus resultierende Verlagerung bzw. die aus der Verlagerung resultierende Kraft an der Teilkupplung K1.

Entsprechend ist der Betätigungskolben 5 in Fig. 6 nach rechts und der Betätigungskolben 22 in Fig. 6 nach links im Vergleich zur Darstellung nach Fig. 5 verlagert. Damit zeigt Fig. 6 die Kupplung im Neuzustand mit geschlossener Teilkupplung K1 und offener Teilkupplung K2.

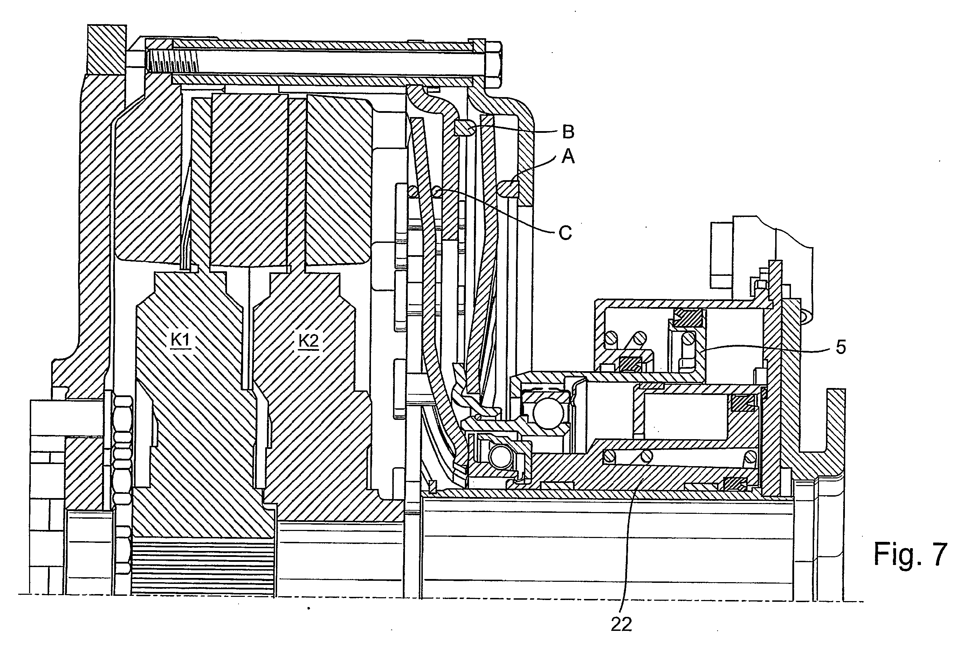

Fig. 7 zeigt zwar die Doppelkupplungsanordnung nach den Figuren 5 und 6, allerdings nicht im Neuzustand sondern im Verschleißzustand, und zwar mit offener Teilkupplung K1 und geschlossener Teilkupplung K2 (d.h. im Zustand ohne Aufbringen einer Betätigungskraft durch die Betätigungseinrichtung 3). Vorliegend ist in Fig. 7 der Betätigungskolben 22 am Ende des maximalen Verschleißweges dargestellt, was sich aus einem Vergleich zur Darstellung nach Fig. 5 ergibt, da der Bewegungskolben 22 in seiner Endlage in Richtung Getriebe angekommen ist. Auch der Betätigungskolben 5 hat sich ausgehend von seiner Anfangslage in Fig. 5 weiter nach rechts in Fig. 7 bewegt aufgrund des Verschleißes.

Aufgrund der in Fig. 7 gezeigten Verschleißzustände ist ersichtlich, daß Verschleißreservewege als Teil der maximal möglichen Verlangerungswege der Betätigungskolben vorhanden sind. Entsprechend ist die Betätigungseinrichtung in der Lage, den Verschleiß zu kompensieren, ohne dass eine separate mechanische Verschleißnachstellungsvorrichtung vorgesehen werden müsste. Diese Art der Kompensation von Verschleiß ist sowohl für das Doppelkupplungskonzept nach Fig. 5 als auch für das Doppelkupplungskonzept nach Fig. 1 und auch für andere Doppelkupplungskonzepte verwendbar. Daher ist dieses Konzept nicht auf die in der vorliegenden Anmeldung gezeigten Doppelkupplungsanordnungen beschränkt, wenn auch in Verbindung mit diesen besonders vorteilhaft verwendbar.

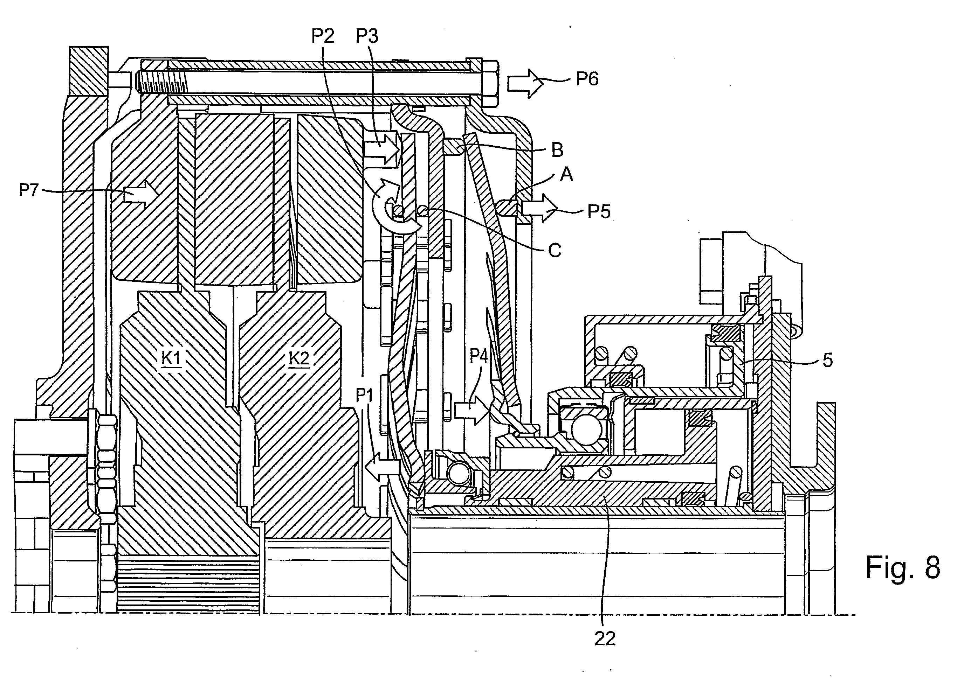

Auch in Fig. 8 ist die Doppelkupplung im Verschleißzustand gezeigt, wobei die Teilkupplung K1 geschlossen und die Teilkupplung K2 offen ist (d.h. im betätigten Zustand des zweiten Ausführungsbeispieles). Entsprechend addiert sich zum Verschleiß bei der äußeren Zylindereinheit noch der notwendige Betätigungsweg, weshalb der Bewegungskolben 5 im Vergleich zu Fig. 7 noch weiter nach rechts verschoben ist. Im Betätigungszustand kann bei vollem Ausschöpfen der Verschleißreserve der Bewegungskolben 5 also seine rechte Endlage erreichen.

In Fig. 8 zeigt Pfeil P1 wiederum die Verlagerung der Tellerfeder aufgrund der durch die Betätigungseinrichtung ausgeübten Druckkraft, Pfeil P2 das Moment um das Auflagerungspunkt C sowie Pfeil P3 die Verlagerung der Druckplatte. Pfeil P4 verdeutlicht die Verlagerung der Hebelfederzungen aufgrund der Zugkraft F_{K1} auf die Hebelfeder 14. Pfeil P5 zeigt die Verlagerung des Zugankers 15, Pfeil P6 die Verlagerung der Schraubenverbindungen zwischen Zuganker und Druckplatte 12 der Teilkupplung und Pfeil P7 die Verlagerung der Druckplatte 12 und die sich hieraus ergebende Anpresskraft zum Schließen der Teilkupplung K1.

Die Ausbildung der Doppelkupplung nach den Figuren 5 bis 8 ist insbesondere für Doppelkupplungsgetriebe vorgesehen, bei denen die am meisten genutzte Übersetzungsstufe in demjenigen Teilgetriebe ist, das mit der im Grundzustand geschlossenen Teilkupplung K2 verbunden ist. Ist der am meisten genutzte Gang mit der im Grundzustand geschlossenen Teilkupplung K2 verbunden, so muss während des Betriebes auf der am meisten benutzten Übersetzungsstufe keine Betätigungskraft durch die Betätigungseinrichtung aufgebracht werden, wodurch die Energieeffizienz der Doppelkupplungsanordnung/des Doppelkupplungsgetriebes steigt.

Üblicherweise ist der am meisten genutzte Gang eines Fahrzeuges der höchste Gang, dies gilt gerade bei Lastkraftwagen. Daher kann das Fahrzeug (der Lastkraftwagen) im höchsten Gang bewegt werden, ohne eine Betätigungskraft über die Betätigungseinrichtung der Doppelkupplung aufzubringen.

Angewendet auf die Doppelkupplung nach Fig. 1 bedeutet dies, dass eine Doppelkupplungsanordnung nach Fig. 1 energetisch besonders günstig verwendet werden kann, wenn die im Grundzustand geschlossene Teilkupplung K1 mit demjenigen Teilgetriebe verbunden ist, welches den am meisten genutzten Gang bzw. gerade für LKWs den höchsten Gang aufweist.

Die Effizienzsteigerung ergibt sich daher beim Doppelkupplungsaufbau nach Fig. 1 und beim Doppelkupplungsaufbau nach Fig. 5 abhängig davon, in welchem Teilgetriebe des Doppelkupplungsgetriebes die am meisten genutzte Übersetzungsstufe angeordnet ist.

Aus der vorstehenden Beschreibung zum zweiten Ausführungsbeispiel ergibt sich, dass die beiden Betätigungskräfte einer Doppelkupplung, einmal der aufgedrückten "normally closed" Kupplung K2 und einmal der "normally open" Kupplung K1 sich ausgleichen, mithin die Summe der beiden Betätigungskräfte nahezu Null ist, so dass keine Überdimensionierung des Kurbelwellenlagers oder Getriebelagers erforderlich ist. Die Ausführungsbeispiele zeigen weiterhin, dass die Kupplung K2 "normally closed" ist, damit beim üblichen Aufbau eines Doppelkupplungsgetriebes der höchste Gang (der, mit der höchsten Verwendung) keine Energieversorgung im Zylinder während des Betriebes benötigt (Energieeinsparung). Gleichzeitig zeigt die vorstehende Beschreibung einen Doppel-CPCA, der ziehen und drücken kann. Dies gilt gleichermaßen auch für das Ausführungsbeispiel nach Fig. 1, wobei dann die Teilkupplung K1 mit dem höchsten Gang (dem mit der höchsten Verwendung) verbunden ist.

### Bezugszeichenliste

- 1: Doppelkupplung
- 2: Achse
- 3: Betätigungseinrichtung
- 4: Zylindergehäuse/einheit
- 5: Bewegungskolben
- 8: Distanzstück
- 9: Schrauben
- 10: Zwischenplatte
- 11: Schwungscheibe
- 12: Druckplatte
- 13: Hebelfeder
- 14: Tellerfeder
- 15: Kupplungsdeckel (Zuganker)
- 16: Betätigungslager
- 21: Zylindergehäuse
- 22: Kolben
- 22A: Öffnung
- 22B: Ausnehmung
- 24: Betätigungslager
- 25: Druckplatte
- 30: Flansch
- 31: Rückwand
- 32: Führungsrohr
- 33: Bereich
- 34: Abstützwellen
- 40: Führung
- 45: Federelement
- 41: Dichtring
- 43: Dichtring
- F_{K1}: Kraft
- F_{K2}: Druckkraft
- I: Schraubenverbindung
- II: Schraubenverbindung

## Patentansprüche

1. Antriebstrang
mit einer Doppelkupplung mit einer ersten Teilkupplung (K1), über die eine Antriebswelle eines Antriebs mit einer ersten Getriebeeingangswelle eines Getriebes verbindbar ist und mit einer zweiten Teilkupplung (K2), über die die Antriebswelle des Antriebs mit einer zweiten Getriebeeingangswelle des Getriebes verbindbar ist und mit einer Betätigungseinrichtung, wobei die erste Teilkupplung (K1) in deren unbetätigtem Zustand, d.h. in ihrem Grundzustand offen ist und zum Schließen dieser ersten Teilkupplung (K1) eine Zugkraft aufgebracht wird, und wobei die zweite Teilkupplung (K2) in deren unbetätigtem Zustand, d.h. in ihrem Grundzustand geschlossen ist und zum Öffnen dieser zweiten Teilkupplung (K2) eine Druckkraft aufgebracht wird,
, so dass die Betätigungskraft der ersten Teilkupplung (K1) entgegen der Betätigungskraft der zweiten Teilkupplung (K2) wirkt
und mit einem Doppelkupplungsgetriebe mit einer ersten und einer zweiten Getriebeeingangswelle, wobei eine erste Gruppe von Übersetzungsstufen der ersten Getriebeeingangswelle und eine zweite Gruppe von Übersetzungsstufen der zweiten Getriebeeingangswelle zugeordnet sind, und wobei die Getriebeeingangswellen über eine Doppelkupplung mit einer Antriebswelle eines Antriebes verbindbar sind, indem die erste Getriebeeingangswelle über die erste Teilkupplung (K1) und die zweite Getriebeeingangswelle über die zweite Teilkupplung (K2) mit der Antriebswelle verbindbar sind,
**dadurch gekennzeichnet, dass** die größte Übersetzungsstufe der im Grundzustand geschlossenen Teilkupplung (K2) zugeordnet ist, wobei
die Betätigungseinrichtung eine erste pneumatisch oder hydraulisch betätigbare Zylindereinheit mit Zylindergehäuse und Kolben zum Ziehen eines Betätigungslagers der einen Teilkupplung (K1) aufweist, und dass die Betätigungseinrichtung eine zweite pneumatisch oder hydraulisch betätigbare Zylindereinheit mit Zylindergehäuse und Kolben zum Drücken eines Betätigungslagers der anderen Teilkupplung (K2) aufweist,
die eine Zugkraft erzeugende erste Zylindereinheit über ein erstes Betätigungslager mit der zugezogenen und im Normalzustand offenen Teilkupplung (K1), und
die eine Druckkraft erzeugende zweite Zylindereinheit über das andere Betätigungslager mit der aufgedrückten und im Normalzustand geschlossenen Teilkupplung (K2) zusammenwirken und
die beiden Zylindereinheiten ineinandergeschachtelt und insbesondere auch symmetrisch zu einer Achse der Getriebeeingangswellen bzw. der Kurbelwelle angeordnet sind, so dass diese bezogen auf die Achse eine innere Zylindereinheit und eine äußere Zylindereinheit bilden, wobei die äußere Zylindereinheit als eine Zugkraft erzeugende erste Zylindereinheit und die innere Zylindereinheit als eine Druckkraft erzeugende zweite Zylindereinheit ausgebildet sind.

2. Antriebsstrang nach Anspruch 1, **gekennzeichnet durch** eine Schwungscheibe mit oder ohne Schwingungsdämpfung, die mit einer Antriebswelle eines Antriebs fest verbunden ist, wobei die Doppelkupplung eine Zentralplatte als Gegendruckplatte für die Druckplatten der Teilkupplungen (K1 und K2) aufweist, wobei die Zentralplatte an der Schwungscheibe fixiert ist, und wobei die Doppelkupplung ausschließlich über die Befestigung der Schwungscheibe an der Antriebswelle gelagert ist.

3. Antriebsstrang nach einem der Ansprüche 1 und 2, **dadurch gekennzeichnet, dass** die Druckplatten beider Teilkupplungen über Blattfedern, insbesondere in Verbindung mit Nietverbindungen, direkt an der Zentralplatte oder am Gehäuse fixiert sind.

4. Antriebsstrang nach einem der Ansprüche 1 bis 3, **dadurch gekennzeichnet, dass** der Kupplungsdeckel der Teilkupplung K2 an der Zentralplatte fixiert ist.

5. Antriebsstrang nach Anspruch 1, **gekennzeichnet durch** ein zentrales und getriebeseitig abgestütztes Führungsrohr, wobei der Kolben der inneren Zylindereinheit auf dem zentralen Führungsrohr bewegbar abgestützt ist, und wobei ein Kolben der äußeren Zylindereinheit auf dem Zylindergehäuse der inneren Zylindereinheit bewegbar abgestützt ist.

6. Antriebsstrang nach einem der Ansprüche 1 bis 5, **dadurch gekennzeichnet, dass** das Zylindergehäuse der inneren Zylindereinheit und/oder das Zylindergehäuse der äußeren Zylindereinheit an einer Rückwand der Betätigungseinrichtung befestigt sind, welche am zentralen Führungsrohr abgestützt ist.

7. Antriebsstrang nach Anspruch 6, **dadurch gekennzeichnet, dass** zwischen Rückwand und Kolben der inneren Zylindereinheit eine Vorlastfeder für die innere Zylindereinheit angeordnet ist, mit der der Kolben in Richtung eines Betätigungslagers einer der Teilkupplungen (K2) gedrückt wird, wobei eine Druckkammer der inneren Zylindereinheit durch Kolben und Zylindergehäuse der inneren Zylindereinheit und Rückwand gebildet ist.

8. Antriebsstrang nach einem der Ansprüche 6 oder 7, **dadurch gekennzeichnet, dass** zwischen Zylindergehäuse und Kolben der äußeren Zylindereinheit eine Vorlastfeder für die äußere Zylindereinheit angeordnet ist, wobei eine Druckkammer der äußeren Zylindereinheit ausschließlich durch Zylindergehäuse und Kolben der äuβeren Zylindereinheit gebildet ist.

## Claims

1. Drivetrain
having a double clutch having a first component clutch (K1) by means of which a driveshaft of a drive can be connected to a first transmission input shaft of a transmission and having a second component clutch (K2) by means of which the driveshaft of the drive can be connected to a second transmission input shaft of the transmission, and having an actuating device, wherein the first component clutch (K1) is open in its non-actuated state, i.e. in its basic state, and a tensile force is applied in order to close said first component clutch (K1), and wherein the second component clutch (K2) is closed in its non-actuated state, i.e. in its basic state, and a pressure force is applied in order to open said second component clutch (K2),
such that the actuating force of the first component clutch (K1) acts counter to the actuating force of the second component clutch (K2),
and having a double clutch transmission having a first and a second transmission input shaft, with a first group of transmission ratio stages being assigned to the first transmission input shaft and a second group of transmission ratio stages being assigned to the second transmission input shaft, and with it being possible for the transmission input shafts to be connected to a driveshaft of a drive by means of a double clutch in that the first transmission input shaft can be connected to the driveshaft by means of the first component clutch (K1) and the second transmission input shaft can be connected to the driveshaft by means of the second component clutch (K2), **characterized in that** the highest transmission ratio stage is assigned to the component clutch (K2) which is closed in the basic state, wherein
the actuating device has a first pneumatically or hydraulically actuable cylinder unit, with cylinder housing and piston, for pulling an actuating bearing of one component clutch (K1), and the actuating device has a second pneumatically or hydraulically actuable cylinder unit, with cylinder housing and piston, for pushing an actuating bearing of the other component clutch (K2),
the first cylinder unit, which generates a tensile force, interacts via a first actuating bearing with the component clutch (K1) which is pulled closed and which is open in the normal state, and the second cylinder unit, which generates a pressure force, interacts via the other actuating bearing with the component clutch (K2) which is pushed open and which is closed in the normal state, and
the two cylinder units are nested one inside the other and are in particular also arranged symmetrically with respect to an axis of the transmission input shafts and of the crankshaft, such that said cylinder units form an inner cylinder unit and an outer cylinder unit in relation to the axis, with the outer cylinder unit being designed as a first cylinder unit which generates a tensile force, and with the inner cylinder unit being designed as a second cylinder unit which generates a pressure force.

2. Drivetrain according to Claim 1, **characterized by** a flywheel disk with or without vibration damping, which flywheel disk is fixedly connected to a driveshaft of a drive, with the double clutch having a central plate as a counterpressure plate for the pressure plates of the component clutches (K1 and K2), with the central plate being fixed to the flywheel disk, and with the double clutch being mounted exclusively by means of the fastening of the flywheel disk to the driveshaft.

3. Drivetrain according to one of Claims 1 and 2, **characterized in that** the pressure plates of the two component clutches are fixed directly to the central plate or to the housing by means of leaf springs, in particular in conjunction with rivet connections.

4. Drivetrain according to one of Claims 1 to 3, **characterized in that** the clutch cover of the component clutch K2 is fixed to the central plate.

5. Drivetrain according to Claim 1, **characterized by** a central guide tube which is supported on the transmission, with the piston of the inner cylinder unit being movably supported on the central guide tube, and with a piston of the outer cylinder unit being movably supported on the cylinder housing of the inner cylinder unit.

6. Drivetrain according to one of Claims 1 to 5, **characterized in that** the cylinder housing of the inner cylinder unit and/or the cylinder housing of the outer cylinder unit are/is fastened to a rear wall, which is supported on the central guide tube, of the actuating device.

7. Drivetrain according to Claim 6, **characterized in that** a preload spring for the inner cylinder unit is arranged between the rear wall and the piston of the inner cylinder unit, by means of which preload spring the piston is pushed in the direction of an actuating bearing of one of the component clutches (K2), with a pressure chamber of the inner cylinder unit being formed by the piston and cylinder housing of the inner cylinder unit and by the rear wall.

8. Drivetrain according to either of Claims 6 and 7, **characterized in that** a preload spring for the outer cylinder unit is arranged between the cylinder housing and the piston of the outer cylinder unit, with a pressure chamber of the outer cylinder unit being formed exclusively by the cylinder housing and piston of the outer cylinder unit.

## Revendications

1. Chaîne cinématique
comprenant un double embrayage comportant un premier embrayage partiel (K1) par le biais duquel un arbre d'entraînement d'un entraînement peut être relié à un premier arbre d'entrée de transmission d'une transmission et comportant un deuxième embrayage partiel (K2) par le biais duquel l'arbre d'entraînement de l'entraînement peut être relié à un deuxième arbre d'entrée de transmission de la transmission, et comportant un dispositif d'actionnement, le premier embrayage partiel (K1) étant ouvert dans son état non actionné, c'est-à-dire dans son état de base, et une force de traction étant appliquée pour fermer ce premier embrayage partiel (K1), et le deuxième embrayage partiel (K2) étant fermé dans son état non actionné, c'est-à-dire dans son état de base, et une force de poussée étant appliquée pour ouvrir ce deuxième embrayage partiel (K2),
de telle sorte que la force d'actionnement du premier embrayage partiel (K1) agisse à l'encontre de la force d'actionnement du deuxième embrayage partiel (K2),
et comprenant une transmission à double embrayage comprenant un premier et un deuxième arbre d'entrée de transmission, un premier groupe d'étages de transmission étant associé au premier arbre d'entrée de transmission et un deuxième groupe d'étages de transmission étant associé au deuxième arbre d'entrée de transmission, et les arbres d'entrée de transmission pouvant être reliés par le biais d'un double embrayage à un arbre d'entraînement d'un entraînement, par le fait que le premier arbre d'entrée de transmission peut être relié à l'arbre d'entraînement par le biais du premier embrayage partiel (K1) et le deuxième arbre d'entrée de transmission peut être relié à l'arbre d'entraînement par le biais du deuxième embrayage partiel (K2),
**caractérisée en ce que** le plus grand étage de transmission est associé à l'embrayage partiel (K2) fermé à l'état de base,
le dispositif d'actionnement comprenant une première unité de cylindre pouvant être actionnée de manière pneumatique ou hydraulique et comprenant un boîtier de cylindre et un piston pour tirer un palier d'actionnement de l'un des embrayages partiels (K2), et le dispositif d'actionnement comprenant une deuxième unité de cylindre pouvant être actionnée de manière pneumatique ou hydraulique et comprenant un boîtier de cylindre et un piston pour pousser un palier d'actionnement de l'autre embrayage partiel (K2),
la première unité de cylindre générant une force de traction coopérant par le biais d'un premier palier d'actionnement avec l'embrayage partiel (K1) fermé par traction et ouvert à l'état normal, et la deuxième unité de cylindre générant une force de poussée coopérant par le biais de l'autre palier d'actionnement avec l'embrayage partiel (K2) ouvert par poussée et fermé à l'état normal et
les deux unités de cylindre étant connectées l'une dans l'autre et étant en particulier également disposées symétriquement par rapport à un axe des arbres d'entrée de transmission ou du vilebrequin, de telle sorte que celles-ci forment, par rapport à l'axe, une unité de cylindre intérieure et une unité de cylindre extérieure, l'unité de cylindre extérieure étant réalisée en tant que première unité de cylindre générant une force de traction et l'unité de cylindre intérieure étant réalisée en tant que deuxième unité de cylindre générant une force de poussée.

2. Chaîne cinématique selon la revendication 1, **caractérisée par** un volant d'inertie avec ou sans amortissement des vibrations, lequel est relié fixement à un arbre d'entraînement d'un entraînement, le double embrayage comprenant un plateau central en tant que plateau de contrepression pour les plateaux de pression des embrayages partiels (K1 et K2), le plateau central étant fixé au volant d'inertie, et le double embrayage étant monté exclusivement par le biais de la fixation du volant d'inertie à l'arbre d'entraînement.

3. Chaîne cinématique selon l'une quelconque des revendications 1 et 2, **caractérisée en ce que** les plateaux de pression des deux embrayages partiels sont fixés directement sur le plateau central ou sur le boîtier par le biais de ressorts à lames, en particulier en association avec des rivures.

4. Chaîne cinématique selon l'une quelconque des revendications 1 à 3, **caractérisée en ce que** le couvercle d'embrayage de l'embrayage partiel (K2) est fixé au plateau central.

5. Chaîne cinématique selon la revendication 1, **caractérisée par** un tube de guidage central et supporté côté transmission, le piston de l'unité de cylindre intérieure étant supporté de manière mobile sur le tube de guidage central, et un piston de l'unité de cylindre extérieure étant supporté de manière mobile sur le boîtier de cylindre de l'unité de cylindre intérieure.

6. Chaîne cinématique selon l'une quelconque des revendications 1 à 5, **caractérisée en ce que** le boîtier de cylindre de l'unité de cylindre intérieure et/ou le boîtier de cylindre de l'unité de cylindre extérieure est/sont fixé(s) à une paroi arrière du dispositif d'actionnement, laquelle est supportée sur le tube de guidage central.

7. Chaîne cinématique selon la revendication 6, **caractérisée en ce qu'**un ressort de précharge pour l'unité de cylindre intérieure est disposé entre la paroi arrière et le piston de l'unité de cylindre intérieure, à l'aide duquel ressort de précharge le piston est poussé en direction d'un palier d'actionnement de l'un des embrayages partiels (K2), une chambre de pression de l'unité de cylindre intérieure étant formée par le piston et le boîtier de cylindre de l'unité de cylindre intérieure et par la paroi arrière.

8. Chaîne cinématique selon l'une quelconque des revendications 6 et 7, **caractérisée en ce qu'**un ressort de précharge pour l'unité de cylindre extérieure est disposé entre le boîtier de cylindre et le piston de l'unité de cylindre extérieure, une chambre de pression de l'unité de cylindre extérieure étant formée exclusivement par le boîtier de cylindre et le piston de l'unité de cylindre extérieure.
